# EUROPEAN PATENT APPLICATION

(11) **EP 4 832 060 A1**
(43) Date of publication of application: **28.10.2026**
(21) Application number: 26741094.2
(22) Date of filing: 05.01.2026

(54) **BATTERY APPATATUS AND ELECTRIC DEVICE**

(30) Priority: 05.02.2025 CN 202520178311 U
(71) Applicant: Contemporary Amperex Technology Co., Limited, Ningde, Fujian 352100 (CN)
(72) Inventor: XUE, Danyue, Ningde, Fujian 352100 (CN); KE, Qingpeng, Ningde, Fujian 352100 (CN)
(74) Representative: Kraus & Lederer PartGmbB
(86) International application number: PCT/CN2026/070560
(87) International publication number: WO 2026/166262

(57) **Abstract**

The present application relates to the field of battery technologies, and provides a battery apparatus and a power consuming apparatus. The battery apparatus includes: a battery box, including a lower box body, where the lower box body includes a bottom plate and a box body frame connected to the bottom plate, and an accommodating cavity is defined between the bottom plate and the box body frame; a battery cell, accommodated in the accommodating cavity; and a pressure relief mechanism, where an avoidance cavity is provided on a side of the box body frame that faces away from the accommodating cavity, the avoidance cavity has an avoidance notch, the box body frame is provided with a first hole, the first hole communicates with the accommodating cavity and the avoidance cavity, and the pressure relief mechanism is disposed in the avoidance cavity and blocks the first hole. Through the technical solutions of the present application, a space occupied by the pressure relief mechanism outside the battery box can be reduced, so that impact on a user interface can be reduced.

## Description

### CROSS-REFERENCE TO RELATED APPLICATIONS

The present application claims priority to Chinese Patent Application No. 202520178311.0, filed with the China National Intellectual Property Administration on February 5, 2025 and entitled "BATTERY APPARATUS AND POWER CONSUMING DEVICE", which is incorporated herein by reference in its entirety.

### TECHNICAL FIELD

The present application relates to the field of battery technologies, and specifically, to a battery apparatus and a power consuming device.

### BACKGROUND

Currently, as new energy vehicles develop rapidly, battery apparatuses increasingly enter the public view. The battery apparatus generally includes a battery box and a battery cell disposed in the battery box. A pressure relief mechanism is generally disposed in the battery box. The pressure relief mechanism is configured to be actuated when an internal temperature or pressure of the battery box reaches a preset threshold, to release the internal pressure, thereby improving use safety of the battery apparatus.

In the related art, the pressure relief mechanism is generally disposed on an outer side of the battery box, and protrudes outward from the battery box. As a result, a space outside the battery box is occupied, and a user interface is affected.

### SUMMARY

In view of the foregoing problem, the present application provides a battery apparatus and a power consuming apparatus, to reduce a space occupied by a pressure relief mechanism outside a battery box, to reduce impact on a user interface. The objective is implemented through the following technical solutions.

According to a first aspect, the present application provides a battery apparatus, including: a battery box, including a bottom plate and a box body frame disposed surrounding a peripheral side of the bottom plate, where an accommodating cavity is defined between the bottom plate and the box body frame; a battery cell, accommodated in the accommodating cavity; and a pressure relief mechanism, where an avoidance cavity is provided on a side of the box body frame that faces away from the accommodating cavity, the avoidance cavity has an avoidance notch, the box body frame is provided with a first hole, the first hole communicates with the accommodating cavity and the avoidance cavity, and the pressure relief mechanism is disposed in the avoidance cavity and mounted in the first hole.

According to the battery apparatus provided in the present application, the avoidance cavity is provided on the side of the box body frame that faces away from the accommodating cavity. The avoidance notch for mounting the pressure relief mechanism is provided in the avoidance cavity. In addition, the first hole in communication with the accommodating cavity is further provided on the box body frame. The pressure relief mechanism is mounted in the avoidance cavity and blocks the first hole. In this way, when an internal temperature or pressure of the accommodating cavity reaches a preset threshold, the pressure relief mechanism can be actuated to release the internal pressure of the accommodating cavity, thereby improving stability and safety of use of the battery apparatus. In addition, because the pressure relief mechanism is mounted in the avoidance cavity, a space occupied by the pressure relief mechanism outside the battery box can be reduced, and impact on a user interface outside the battery box can be reduced, to facilitate mounting and use of an external device member and facilitate mounting and disassembly of the battery box, so as to improve user experience.

Moreover, the battery apparatus according to the present application may further have the following additional technical features.

In some implementations of the present application, the box body frame includes a side frame, and the side frame is disposed surrounding the peripheral side of the bottom plate and defines the accommodating cavity between the side frame and the bottom plate; and the side frame is provided with the first hole, and the avoidance cavity is provided on a side of the side frame that faces away from the accommodating cavity.

In the foregoing technical solution, the side frame extends and is disposed in a peripheral direction of the bottom plate and defines the accommodating cavity for accommodating the battery cell between the side frame and the bottom plate. The first hole in communication with the accommodating cavity is provided on the side frame, and the avoidance cavity in communication with the first hole is provided on the side of the side frame that faces away from the accommodating cavity. The pressure relief mechanism is mounted in the avoidance cavity and blocks the first hole, so that a space occupied by the pressure relief mechanism outside the side frame can be reduced, and impact on a user interface can be reduced.

In some implementations of the present application, the side frame includes a first side beam, and the first side beam includes a first plate body, a second plate body, and a blocking member. The first plate body is located on a side of the second plate body that is close to the battery cell, and the first plate body and the second plate body are disposed spaced away in parallel. The first hole is provided on the first plate body. The avoidance notch is provided on the second plate body. The blocking member is disposed surrounding an inner peripheral side of the avoidance notch, and defines the avoidance cavity between the blocking member and a side of the first plate body that faces away from the battery cell. The pressure relief mechanism is mounted on the first plate body.

In the foregoing technical solution, in other words, the first side beam is of a double-layer plate body structure. The first plate body and the second plate body of the first side beam are disposed spaced away in parallel. There is a gap between the first plate body and the second plate body. In addition, the first plate body is closer to the battery cell than the second plate body. In this case, the first hole is provided on the first plate body, the pressure relief mechanism is mounted on the first plate body and blocks the first hole, the avoidance notch is provided on the second plate body, and the blocking member is disposed surrounding the inner peripheral side of the avoidance notch, and extends toward the first plate body to be connected to a side of the first plate body that faces the second plate body, to define the avoidance cavity between the blocking member and the first plate body. In this way, when the internal temperature or pressure of the accommodating cavity reaches the preset threshold, the pressure relief mechanism is actuated to establish communication between the first hole and the avoidance cavity, so that the internal pressure of the accommodating cavity can enter the avoidance cavity through the first hole and can be vented to the outside of the battery box through the avoidance notch.

In some implementations of the present application, the blocking member includes an enclosure plate, and the enclosure plate is fixedly connected to an inner wall surface of the avoidance notch and the side of the first plate body that faces away from the battery cell.

In the foregoing technical solution, the enclosure plate is disposed surrounding the inner wall surface of the avoidance notch, to form a cavity with two ends open. One end of the enclosure plate is fixedly connected to the side of the first plate body that faces the second plate body, and the other end may be disposed flush with an end surface on which the avoidance notch is located, to define the avoidance cavity for mounting the pressure relief mechanism. The structure and principle are simple, and implementation is easy.

In some implementations of the present application, the side frame includes a second side beam, a side surface of the second side beam that faces away from the accommodating cavity is partially recessed to form the avoidance cavity, a blocking surface is formed at one end of the avoidance cavity that faces away from the avoidance notch, the blocking surface is provided with the first hole, and the pressure relief mechanism is mounted on the blocking surface.

In the foregoing technical solution, in other words, the side frame includes a single-layer second side beam. The second side beam has a thickness. The avoidance cavity is provided on the second side beam. The avoidance cavity is formed by partially recessing a side of the second side beam that faces away from the accommodating cavity toward a side of the second side beam that is close to the accommodating cavity, so that a bottom wall surface of the avoidance cavity is a sealed blocking surface, and the avoidance notch is formed on the other side corresponding to the blocking surface. Further, the first hole is provided on the bottom wall surface of the avoidance cavity, and the pressure relief mechanism is mounted on the bottom wall surface of the avoidance cavity and blocks the first hole, so that a space occupied by the pressure relief mechanism outside the lower box body can be reduced, and impact on a user interface outside the battery box can be reduced.

In some implementations of the present application, the side frame includes a side frame main body and an adapter beam, the side frame main body is disposed surrounding the peripheral side of the bottom plate and defines the accommodating cavity between the side frame main body and the bottom plate, the adapter beam is disposed on a side of the side frame main body that faces away from the accommodating cavity and defines a mounting cavity between the adapter beam and the side frame main body, and the mounting cavity is configured to mount a high-voltage box, and allow gas to flow between the mounting cavity and the accommodating cavity; and the avoidance cavity and the first hole are provided on the adapter beam.

In the foregoing technical solution, the battery apparatus generally further includes the high-voltage box. The adapter beam is disposed on an outer side of the side frame main body, and defines the mounting cavity between the adapter beam and the side frame main body, to facilitate mounting of the high-voltage box. Further, the avoidance cavity is provided on a side of the adapter beam that faces away from the mounting cavity, and the first hole in communication with the accommodating cavity and the mounting cavity is provided on the bottom wall surface of the avoidance cavity. In this way, when the pressure relief mechanism is mounted in the avoidance cavity and blocks the first hole, a space occupied by the pressure relief mechanism outside the battery box can also be reduced, and impact on a user interface can be reduced.

In some implementations of the present application, the adapter beam includes an adapter beam main body and two end connection beams connected to two ends of the adapter beam main body, and the adapter beam main body is connected to the side frame main body through the two end connection beams. A side of the end connection beam that faces away from the mounting cavity is partially recessed to form the avoidance cavity, and the bottom wall surface of the avoidance cavity is provided with the first hole.

In the foregoing technical solution, the end connection beam has a thickness. The side of the end connection beam that faces away from the mounting cavity is partially recessed to form the avoidance cavity, and a sealing surface may be formed on the bottom wall surface of the avoidance cavity. In addition, the bottom wall surface of the avoidance cavity is provided with the first hole, and the pressure relief mechanism is mounted on the bottom wall surface of the avoidance cavity formed by the end connection beam and blocks the first hole, so that a space occupied by the pressure relief mechanism outside the battery box can be reduced. The structure and principle are simple, and implementation is easy.

In some implementations of the present application, the end connection beam includes a sheet metal part or a die-casting part; and/or the end connection beam is separately welded to the adapter beam main body and the side frame main body.

In the foregoing technical solution, the sheet metal part or the die-casting part facilitates processing and forming of the avoidance cavity and is suitable for mass production, to help improve production efficiency and reduce production costs.

The end connection beam is welded to the adapter beam main body and the side frame main body, to help improve reliability of connection of the end connection beam, thereby helping improve stability and reliability of use of the pressure relief mechanism.

In some implementations of the present application, the box body frame further includes at least one partition member, and the at least one partition member is disposed in the accommodating cavity and partitions the accommodating cavity into at least two accommodating spaces.

In the foregoing technical solution, the at least one partition member is disposed in the side frame, to partition the accommodating cavity into the at least two accommodating spaces. Each accommodating space may be used for accommodating the battery cell, to regionally manage and control the battery cell, thereby further improving stability of use of the battery apparatus.

According to a second aspect, the present application provides a power consuming apparatus, including the battery apparatus according to any of the implementations of the first aspect, where the battery apparatus is configured to supply power to the power consuming apparatus.

The power consuming apparatus according to the present application includes the battery apparatus according to any of the implementations of the first aspect. Therefore, the power consuming apparatus has a technical effect of any implementation described above. Details are not described herein again.

The foregoing descriptions are only an overview of the technical solutions of the present application. To understand the technical means of the present application more clearly, implementation can be performed according to content of the specification. Moreover, to make the foregoing and other objectives, features and advantages of the present application more comprehensible, specific implementations of the present application are set forth below.

### BRIEF DESCRIPTION OF THE DRAWINGS

Various other advantages and benefits become clear to a person of ordinary skill in the art by reading the following detailed descriptions of exemplary implementations. The accompanying drawings are merely used for illustrating exemplary implementations and are not intended to constitute a limitation on the present application. Throughout the accompanying drawings, same reference numerals are used to represent same components. In the accompanying drawings:
FIG. 1 is a schematic diagram of a structure of a vehicle according to some embodiments of the present application;
FIG. 2 is a schematic diagram of an exploded structure of a battery apparatus according to some embodiments of the present application;
FIG. 3 is a schematic diagram of a structure of a lower box body from a viewing angle according to some embodiments of the present application;
FIG. 4 is a schematic diagram of an enlarged structure of a part A in FIG. 3;
FIG. 5 is a schematic diagram of a structure of a lower box body from another viewing angle according to some embodiments of the present application;
FIG. 6 is a schematic diagram of a partial cross-sectional structure in a direction B-B in FIG. 5;
FIG. 7 is a schematic diagram of a structure of a lower box body from another viewing angle according to some embodiments of the present application;
FIG. 8 is a schematic diagram of an enlarged structure of a part C in FIG. 7; and
FIG. 9 is a schematic diagram of an exploded structure of an end connection beam and a pressure relief mechanism according to some embodiments of the present application.

### Reference numerals:

1000. vehicle;
100. battery apparatus; 200. controller; 300. motor;
10. battery box; 11. upper box body; 12. lower box body; 20. battery cell;
121. bottom plate; 122. box body frame; 123. accommodating cavity; 124. pressure relief mechanism;
1221. side frame; 1222. partition member; 1223. adapter beam; 1224. communication port;
12211. first plate body; 12212. second plate body; 12213. avoidance cavity; 12214. blocking member; 12215. first hole; 12231. adapter beam main body; and 12232. end connection beam.

### DETAILED DESCRIPTION

Embodiments of technical solutions of the present application will be described in detail below with reference to the accompanying drawings. The following embodiments are merely intended to describe the technical solutions of the present application more clearly, and therefore merely serve as examples, but are not intended to limit the protection scope of the present application.

Unless otherwise defined, meanings of all technical and scientific terms used herein are the same as those usually understood by a person skilled in the art to which the present application belongs. The terms used herein are merely intended to describe objectives of specific embodiments, but are not intended to limit the present application. The terms "include", "have" and any variations thereof in the specification and the claims of the present application and in the description of the accompanying drawings above are intended to cover a non-exclusive inclusion.

In the descriptions of the embodiments of the present application, the technical terms "first", "second", and the like are used only to distinguish between different objects and are not understood to indicate or imply relative importance or to imply a quantity, a specific order or a primary-secondary relationship of the indicated technical features. In the descriptions of the embodiments of the present application, "a plurality of" means two or more, unless otherwise expressly and specifically defined.

The "embodiment" mentioned herein means that specific features, structures, or characteristics described with reference to the embodiment may be included in at least one embodiment of the present application. The term appearing at different positions of the specification may not necessarily refer to a same embodiment or an independent or alternative embodiment that is mutually exclusive with another embodiment. A person skilled in the art explicitly and implicitly understands that the embodiments described herein may be combined with other embodiments.

In the descriptions of the embodiments of the present application, the term "and/or" describes only an association relationship between associated objects and indicates that three relationships may exist. For example, A and/or B may indicate the following three cases: Only A exists, both A and B exist, and only B exists. In addition, the character "/" herein generally indicates an "or" relationship between contextually associated objects.

In the descriptions of the embodiments of the present application, the term "a plurality of" refers to more than two (including two). Similarly, "a plurality of groups" refers to more than two groups (including two groups), and "a plurality of pieces" refers to more than two pieces (including two pieces).

In the descriptions of the embodiments of the present application, orientations or positional relationships indicated by the technical terms "center", "longitudinal", "transverse", "length", "width", "thickness", "upper", "lower", "front", "rear", "left", "right", "vertical" "horizontal", "top", "bottom", "inner", "outer", "clockwise", "counterclockwise", "axial", "radial", "circumferential", or the like are based on orientations or positional relationships shown in the accompanying drawings, and are only for the convenience of describing the embodiments of the present application and simplifying the description, and do not indicate or imply that an apparatus or element referred to needs to have a specific orientation, be constructed and operated in a specific orientation, and therefore cannot be understood as limitations on the embodiments of the present application.

In the descriptions of the embodiments of the present application, unless otherwise explicitly specified or defined, the technical terms such as "mount", "connect", "connection", and "fix" should be understood in a broad sense. For example, the connection may be a fixed connection, a detachable connection, or an integral connection; or the connection may be a mechanical connection, or an electrical connection; or the connection may be a direct connection, an indirect connection through an intermediate medium, internal communication between two elements, or an interaction relationship between two elements. A person of ordinary skill in the art can understand specific meanings of the foregoing terms in the embodiments of the present application according to a specific situation.

Nowadays, from a perspective of development of the market situation, battery apparatuses are applied increasingly. The battery apparatuses are used in energy storage power systems such as water power plant, fire power plant, wind power plant and solar power plant, and are also widely used in electric vehicles such as electric bikes, electric motorcycles, electric vehicles, as well as in military equipment, aerospace and other fields. With continuous expansion of application fields of the battery apparatuses, market demands of the battery apparatuses are also expanding.

The battery apparatus generally includes a battery box and a battery cell disposed in the battery box. A pressure relief mechanism is generally disposed in the battery box. The pressure relief mechanism is configured to be actuated when an internal temperature or pressure of the battery box reaches a preset threshold, to release the internal pressure, thereby improving use safety of the battery apparatus.

In the related art, the pressure relief mechanism is generally disposed on an outer side of the battery box, and protrudes outward from the battery box. As a result, a space outside the battery box is occupied, and a user interface is affected.

To resolve a problem that the pressure relief mechanism of the battery apparatus occupies the space outside the battery box, causing impact on the user interface, the present application designs a battery apparatus. The battery apparatus includes a battery box. The battery box has a lower box body. The lower box body includes a bottom plate and a box body frame connected to the bottom plate. An accommodating cavity for accommodating a battery cell is defined between the box body frame and the bottom plate. An avoidance cavity is provided on the box body frame of the battery apparatus, the avoidance cavity has an avoidance notch, the avoidance cavity is located on a side of the box body frame that faces away from the accommodating cavity, and the box body frame is provided with a first hole in communication with the accommodating cavity and the avoidance cavity. A pressure relief mechanism is mounted in the avoidance cavity and blocks the first hole, so that the pressure relief mechanism does not occupy a space outside the battery box, thereby helping reduce impact on a user interface outside the battery box.

The battery apparatus disclosed in the embodiments of the present application may be used in, but is not limited to, a power consuming apparatus such as a vehicle, a ship, or an aircraft. A power supply system that includes the battery cell, the battery apparatus, and the like disclosed in the present application to form the power consuming apparatus may be used. In this way, it is beneficial to reduce the space occupied by the pressure relief mechanism outside the battery box in the battery apparatus, and help reduce impact on the user interface.

For convenience of description, the following embodiments are described by using an example in which a power consuming apparatus according to an embodiment of the present application is a vehicle 1000.

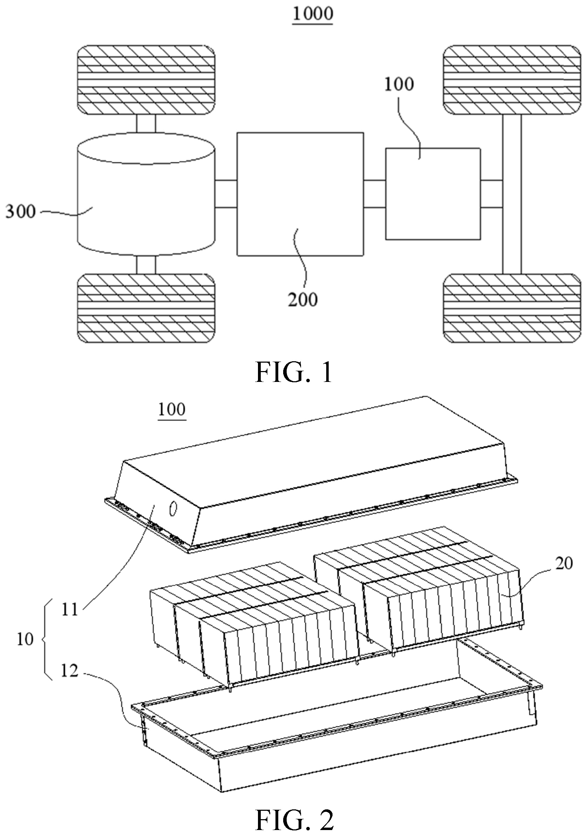

Referring to FIG. 1, FIG. 1 is a schematic diagram of a structure of a vehicle 1000 according to some embodiments of the present application. The vehicle 1000 may be a gasoline vehicle, a natural gas vehicle, or a new energy vehicle. The new energy vehicle may be a pure electric vehicle, a hybrid electric vehicle, an extended range electric vehicle, or the like. A battery apparatus 100 is disposed inside the vehicle 1000. The battery apparatus 100 may be disposed at a bottom, head, or tail of the vehicle 1000. The battery apparatus 100 may be configured to supply power to the vehicle 1000. For example, the battery apparatus 100 may be used as an operating power supply of the vehicle 1000. The vehicle 1000 may further include a controller 200 and a motor 300. The controller 200 is configured to control the battery apparatus 100 to supply power to the motor 300, for example, to meet operating electricity requirements during starting, navigation, and traveling of the vehicle 1000.

In some embodiments of the present application, the battery apparatus 100 may be used as the operating power supply of the vehicle 1000, and may also be used as a driving power supply of the vehicle 1000, to provide driving power for the vehicle 1000 instead of or partially instead of gasoline or natural gas.

Referring to FIG. 2, FIG. 2 is a schematic diagram of an exploded structure of a battery apparatus 100 according to some embodiments of the present application. The battery apparatus (Battery Apparatus) mentioned in the embodiments of the present application may include one or more battery cell assemblies, configured to provide a voltage and a capacity. The battery cell assembly (Battery Cell Assembly) may include a plurality of battery cells 20, and the plurality of battery cells 20 are connected in series, connected in parallel, or connected in a series-parallel configuration through a bus component.

In some embodiments, the battery cell assembly (Battery Cell Assembly) is usually formed by arranging the plurality of battery cells 20.

In an example, the battery cell assembly may be a battery module (Battery Module). The battery module is an independent module that is formed by arranging and fixing the plurality of battery cells 20. In an example, the battery module may be formed by bundling the plurality of battery cells 20 through a cable tie.

The technical solutions described in the embodiments of the present application are all applicable to various power consuming apparatuses using the battery cell 20, such as a mobile phone, a portable device, a notebook computer, a battery bike, an electric toy, an electric tool, an electric vehicle, ship and spacecraft. For example, the spacecraft includes an airplane, a rocket, a space shuttle, and a spaceship.

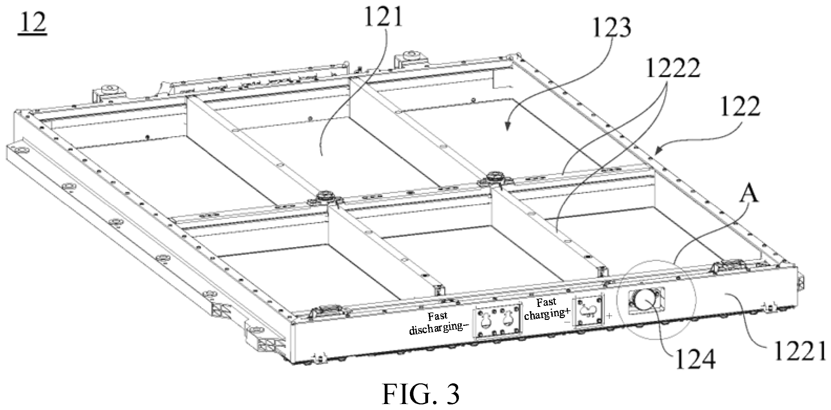

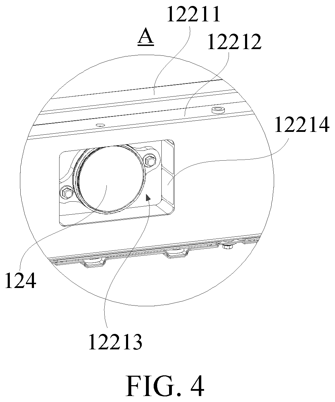

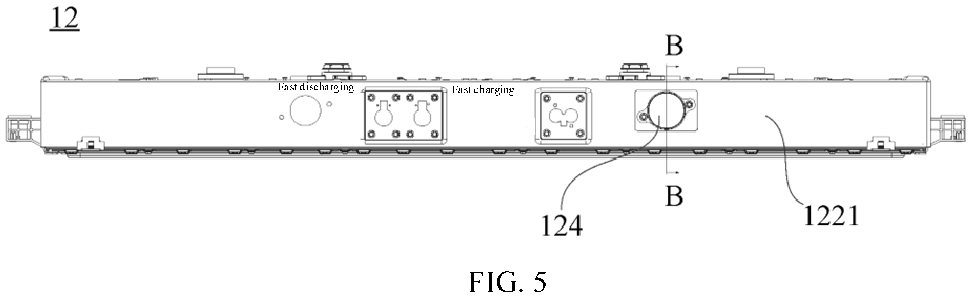

Referring to FIG. 3 to FIG. 6, FIG. 3 is a schematic diagram of a structure of a lower box body from a viewing angle according to some embodiments of the present application; FIG. 4 is a schematic diagram of an enlarged structure of a part A in FIG. 3; FIG. 5 is a schematic diagram of a structure of a lower box body from another viewing angle according to some embodiments of the present application; and

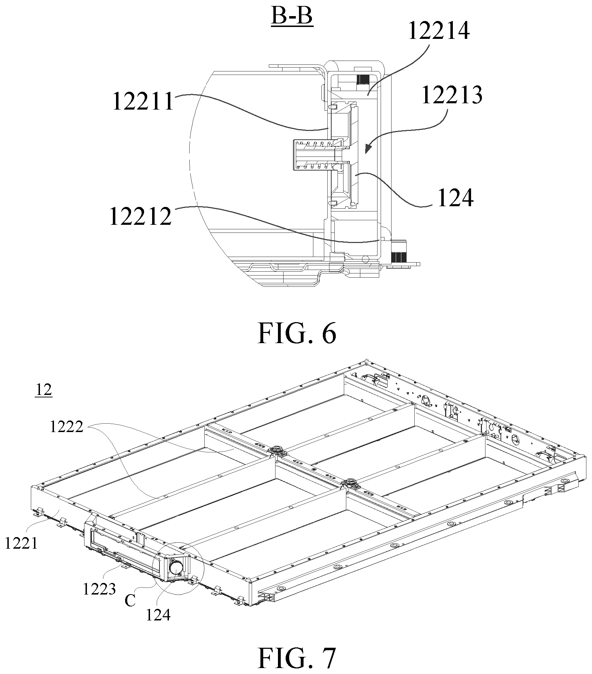

FIG. 6 is a schematic diagram of a partial cross-sectional structure in a direction B-B in FIG. 5. An embodiment of the present application provides a battery apparatus, including: a battery box 10, a battery cell 20, and a pressure relief mechanism 124. The battery box 10 includes a bottom plate 121 and a box body frame 122 disposed surrounding a peripheral side of the bottom plate 121, and an accommodating cavity 123 is defined between the bottom plate 121 and the box body frame 122. The battery cell 20 is accommodated in the accommodating cavity 123. An avoidance cavity 12213 is provided on a side of the box body frame 122 that faces away from the accommodating cavity 123. The avoidance cavity 12213 has an avoidance notch. In addition, the box body frame 122 is provided with a first hole 12215. The first hole 12215 communicates with the accommodating cavity 123 and the avoidance cavity 12213. The pressure relief mechanism 124 is disposed in the avoidance cavity 12213 and is mounted in the first hole 12215.

In this embodiment of the present application, the battery cell 20 may be a secondary battery, where the secondary battery is a battery cell 20 whose active materials can be activated for continuous use through charging after the battery cell 20 is discharged.

The battery cell 20 may be a lithium-ion battery, a sodium-ion battery, a sodium-lithium-ion battery, a lithium metal battery, a sodium metal battery, a lithium-sulfur battery, a magnesium-ion battery, a nickel hydrogen battery, a nickel cadmium battery, a lead storage battery, or the like. This is not limited in this embodiment of the present application.

In some embodiments, the battery apparatus may be a battery pack (Battery Pack). The battery pack includes the battery box 10 and one or more battery cell 20 assemblies, and the battery cell 20 assemblies are accommodated in the battery box 10.

In an example, the battery cell 20 assemblies may be accommodated in the battery box 10 by fixing a battery module in the battery box 10.

In an example, the battery cell 20 assemblies may alternatively be accommodated in the battery box 10 by directly fixing the plurality of battery cells 20 in the battery box 10.

In an example, the battery box 10 may include an upper box body and a lower box body 12. The upper box body and the lower box body 12 are buckled, so that a closed space is formed inside the battery box 10, to accommodate the battery cell 20 assemblies. The "closed" herein refers to being covered or closed, and may refer to being sealed or unsealed. The upper box body may be a top cover or a bottom plate 121.

In an example, the battery box 10 may include a top cover, a box body frame 122, and a bottom plate 121. The top cover and the bottom plate 121 are respectively connected to the box body frame 122, so that the closed space is formed inside the battery box 10, to accommodate the battery cell 20 assemblies.

In some embodiments, the battery box 10 may be used as a part of a chassis structure of a vehicle. For example, a part of the battery box 10 may become at least a part of a bottom plate 121 of the vehicle, or a part of the battery box 10 may become at least a part of a cross beam and a longitudinal beam of the vehicle.

In this embodiment of the present application, the pressure relief mechanism 124 is configured to vent internal gas of the battery box 10.

In an example, when an internal pressure or temperature of the battery box 10 reaches a preset threshold, the pressure relief mechanism is actuated to release the internal pressure or temperature. When the internal pressure or temperature of the battery box 10 reaches the preset threshold, the pressure relief mechanism 124 performs an action or a weak structure disposed in the pressure relief mechanism 124 is damaged, to form an opening or a channel through which the internal pressure or temperature can be released. Design of the threshold varies according to different design requirements. The threshold may depend on materials of one or more of a positive electrode plate, a negative electrode plate, an electrolyte, and an isolation member in the battery box 10.

The "actuate" mentioned in the present application refers to that the pressure relief mechanism 124 initiates an action or is activated to a specific state, so that an internal pressure and temperature of the battery cell 20 are released. The action initiated by the pressure relief mechanism 124 may include, but is not limited to: A component in the pressure relief mechanism 124 is moved to form an air vent channel, at least a part of the pressure relief mechanism 124 is cracked, shattered, torn, or opened, and the like. When the pressure relief mechanism 124 is actuated, high-temperature and high-pressure substances inside the battery cell 20 are vented from an actuated position as emissions. In this manner, it is possible to enable the battery cell 20 to undergo pressure relief and temperature relief at a controllable pressure or temperature, thereby avoiding occurrence of more serious potential accidents.

In this embodiment of the present application, that the pressure relief mechanism 124 is disposed in the avoidance cavity 12213 may be that the pressure relief mechanism 124 is partially located in the accommodating cavity 123, or the pressure relief mechanism 124 is completely located in the avoidance cavity 12213. In other words, an external end surface of the pressure relief mechanism 124 does not extend beyond an end surface on which the avoidance notch is located. Preferably, the pressure relief mechanism 124 is completely located in the avoidance cavity 12213.

The avoidance cavity 12213 is provided on the side of the box body frame 122 that faces away from the accommodating cavity 123. The avoidance notch for mounting the pressure relief mechanism 124 is provided in the avoidance cavity 12213. In addition, the first hole 12215 in communication with the accommodating cavity 123 is further provided on the box body frame 122. The pressure relief mechanism 124 is mounted in the avoidance cavity 12213 and blocks the first hole 12215. In this way, when an internal temperature or pressure of the accommodating cavity 123 reaches a preset threshold, the pressure relief mechanism 124 can be actuated to release the internal pressure of the accommodating cavity 123, thereby improving stability and safety of use of the battery apparatus. In addition, because the pressure relief mechanism 124 is mounted in the avoidance cavity 12213, a space occupied by the pressure relief mechanism 124 outside the battery box 10 can be reduced, and impact on a user interface outside the battery box 10 can be reduced, to facilitate mounting and use of an external device member and facilitate mounting and disassembly of the battery box 10, so as to improve user experience.

Referring to FIG. 3, according to some embodiments of the present application, the box body frame 122 includes a side frame 1221. The side frame 1221 is disposed surrounding a peripheral side of the bottom plate 121, and defines the accommodating cavity 123 between the side frame 1221 and the bottom plate 121. The side frame 1221 is provided with the first hole 12215, and the avoidance cavity 12213 is provided on a side of the side frame 1221 that faces away from the accommodating cavity 123.

The side frame 1221 is disposed to extend in a peripheral direction of the bottom plate 121 and defines the accommodating cavity 123 for accommodating the battery cell 20 between the side frame 1221 and the bottom plate 121. The first hole 12215 in communication with the accommodating cavity 123 is provided on the side frame 1221, and the avoidance cavity 12213 in communication with the first hole 12215 is provided on the side of the side frame 1221 that faces away from the accommodating cavity 123. The pressure relief mechanism 124 is mounted in the avoidance cavity 12213 and blocks the first hole 12215, so that a space occupied by the pressure relief mechanism 124 outside the side frame 1221 can be reduced, and impact on a user interface can be reduced.

According to some embodiments of the present application, the lower box body 12 further includes a partition plate disposed in the side frame 1221. The partition plate is configured to partition the accommodating cavity 123 to form an air vent channel, and the air vent channel separately communicates with the accommodating cavity 123 and the first hole 12215.

Referring to FIG. 5 and FIG. 6, according to some embodiments of the present application, the side frame 1221 includes a first side beam. The first side beam includes a first plate body 12211, a second plate body 12212, and a blocking member 12214. The first plate body 12211 is located on a side of the second plate body 12212 that is close to the battery cell 20, and the first plate body 12211 and the second plate body 12212 are disposed spaced away in parallel. The first hole 12215 is provided on the first plate body 12211. The avoidance notch is provided on the second plate body 12212. The blocking member 12214 is disposed surrounding an inner peripheral side of the avoidance notch, and defines the avoidance cavity 12213 between the blocking member 12214 and a side of the first plate body 12211 that faces away from the battery cell 20. The pressure relief mechanism 124 is mounted on the first plate body 12211.

It may be understood that, the first side beam is of a double-layer plate structure, and the first side beam may be any structure segment of the side frame 1221.

The first plate body 12211 and the second plate body 12212 of the first side beam are disposed spaced away in parallel. There is a gap between the first plate body 12211 and the second plate body 12212. In addition, the first plate body 12211 is closer to the battery cell 20 than the second plate body 12212. In this case, the first hole 12215 is provided on the first plate body 12211, the pressure relief mechanism 124 is mounted on the first plate body 12211 and blocks the first hole 12215, the avoidance notch is provided on the second plate body 12212, and the blocking member 12214 is disposed surrounding the inner peripheral side of the avoidance notch, and extends toward the first plate body 12211 to be connected to a side of the first plate body 12211 that faces the second plate body 12212, to define the avoidance cavity 12213 between the blocking member 12214 and the first plate body 12211. In this way, when the internal temperature or pressure of the accommodating cavity 123 reaches the preset threshold, the pressure relief mechanism 124 is actuated to communicate the first hole 12215 with the avoidance cavity 12213, so that the internal pressure of the accommodating cavity 123 can enter the avoidance cavity 12213 through the first hole 12215 and can be vented to the outside of the battery box 10 through the avoidance notch.

Referring to FIG. 4 to FIG. 6, according to some embodiments of the present application, the blocking member 12214 includes an enclosure plate. The enclosure plate is fixedly connected to the inner wall surface of the avoidance notch and the side of the first plate body 12211 that faces away from the battery cell 20.

Specifically, the enclosure plate is disposed surrounding the inner wall surface of the avoidance notch, to form a cavity with two ends open. In addition, one end of the enclosure plate is fixedly connected to the side of the first plate body 12211 that faces the second plate body 12212, and the other end may be disposed flush with an end surface on which the avoidance notch is located, to define the avoidance cavity 12213 for mounting the pressure relief mechanism 124. The structure and principle are simple, and implementation is easy.

According to some embodiments of the present application, the side frame 1221 includes a second side beam. A side surface of the second side beam that faces away from the accommodating cavity 123 is partially recessed to form the avoidance cavity 12213. A blocking surface is formed at one end of the avoidance cavity 12213 that faces away from the avoidance notch. The blocking surface is provided with the first hole 12215. The pressure relief mechanism 124 is mounted on the blocking surface.

In this embodiment of the present application, the second side beam is of a single-layer plate structure with a thickness. Specifically, a thickness of the second side beam is greater than a thickness of the pressure relief mechanism 124 in a direction from the accommodating cavity 123 to the side frame 1221.

A side of the second side beam that faces away from the accommodating cavity 123 is partially recessed toward a direction close to the accommodating cavity 123 to form the avoidance cavity 12213, so that a bottom wall surface of the avoidance cavity 12213 is a sealed blocking surface, and the avoidance notch is formed on the other side corresponding to the blocking surface. Further, the first hole 12215 is provided on the bottom wall surface of the avoidance cavity 12213, so that the pressure relief mechanism 124 is mounted on the bottom wall surface of the avoidance cavity 12213 and blocks the first hole 12215. In this way, a space occupied by the pressure relief mechanism 124 outside the lower box body 12 can be reduced, and impact of a user on a user interface outside the battery box 10 can be reduced.

Referring to FIG. 7, FIG. 7 is a schematic diagram of a structure of a lower box body from another viewing angle according to some embodiments of the present application. According to some embodiments of the present application, the side frame 1221 includes a side frame main body and an adapter beam 1223. The side frame main body is disposed surrounding the peripheral side of the bottom plate 121, and defines the accommodating cavity 123 between the side frame main body and the bottom plate 121. The adapter beam 1223 is disposed on a side of the side frame main body that faces away from the accommodating cavity 123, and defines a mounting cavity between the adapter beam 1223 and the side frame main body. The mounting cavity is configured to mount a high-voltage box, and allow gas to flow between the mounting cavity and the accommodating cavity 123. The avoidance cavity 12213 and the first hole 12215 are provided on the adapter beam 1223.

For example, the mounting cavity is rectangular or trapezoidal.

For example, the side frame main body is provided with a communication port 1224, and the communication port 1224 is configured to communicate the mounting cavity with the accommodating cavity 123.

The high-voltage box is configured to distribute high-voltage electricity of the battery apparatus to various high-voltage power consuming devices, and perform safety management on a high-voltage circuit.

The adapter beam 1223 is disposed on an outer side of the side frame main body, and defines the mounting cavity between the adapter beam 1223 and the side frame main body, so that no space in the accommodating cavity 123 is occupied, and mounting of the high-voltage box is facilitated. Further, the avoidance cavity 12213 is provided on a side of the adapter beam 1223 that faces away from the mounting cavity, and the first hole 12215 in communication with the accommodating cavity 123 and the mounting cavity is provided on the bottom wall surface of the avoidance cavity 12213. In this way, when the pressure relief mechanism 124 is mounted in the avoidance cavity 12213 and blocks the first hole 12215, a space occupied by the pressure relief mechanism 124 outside the battery box 10 can also be reduced, and impact on a user interface can be reduced.

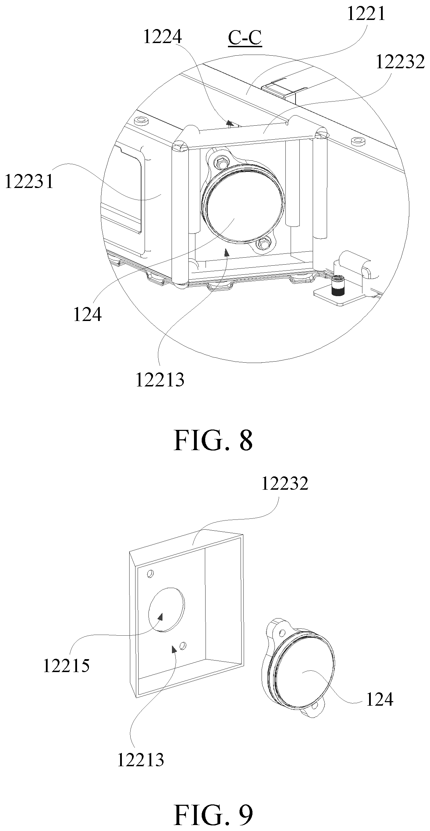

Referring to FIG. 7 to FIG. 9, FIG. 8 is a schematic diagram of an enlarged structure of a part C in FIG. 7; and FIG. 9 is a schematic diagram of an exploded structure of an end connection beam and a pressure relief mechanism according to some embodiments of the present application. According to some embodiments of the present application, the adapter beam 1223 includes an adapter beam main body 12231 and two end connection beams 12232 connected to two ends of the adapter beam main body 12231. The adapter beam main body 12231 is connected to the side frame main body through the two end connection beams 12232. A side of the end connection beam 12232 that faces away from the mounting cavity is partially recessed to form the avoidance cavity 12213. The bottom wall surface of the avoidance cavity 12213 is provided with the first hole 12215.

For example, the two end connection beams 12232 are both inclined toward the adapter beam main body 12231. In this way, when the mounting cavity satisfies a space used for mounting of the high-voltage box, a distance between the adapter beam 1223 and the side frame main body can be reduced, to further save space.

The end connection beam 12232 has a thickness. The side of the end connection beam 12232 that faces away from the mounting cavity is partially recessed to form the avoidance cavity 12213, and a sealing surface may be formed on the bottom wall surface of the avoidance cavity 12213. In addition, the bottom wall surface of the avoidance cavity 12213 is provided with the first hole 12215, and the pressure relief mechanism 124 is mounted on the bottom wall surface of the avoidance cavity 12213 formed by the end connection beam 12232 and blocks the first hole 12215, so that a space occupied by the pressure relief mechanism 124 outside the battery box 10 can be reduced. The structure and principle are simple, and implementation is easy.

According to some embodiments of the present application, the end connection beam 12232 includes a sheet metal part or a die-casting part; and the end connection beam 12232 is separately welded to the adapter beam main body 12231 and the side frame main body.

The sheet metal part or the die-casting part facilitates processing and forming of the avoidance cavity 12213 and is suitable for mass production, to help improve production efficiency and reduce production costs.

The end connection beam 12232 is welded to the adapter beam main body 12231 and the side frame main body, to help improve reliability of connection of the end connection beam 12232, thereby helping improve stability and reliability of use of the pressure relief mechanism 124.

Referring to FIG. 3 and FIG. 7, according to some embodiments of the present application, the box body frame 122 further includes at least one partition member 1222. The at least one partition member 1222 is disposed in the accommodating cavity 123, and partitions the accommodating cavity 123 into at least two accommodating spaces.

For example, the partition member 1222 includes at least one transverse support beam and at least one longitudinal support beam. The transverse support beam extends in a first direction of the lower box body 12 and is fixedly connected to the side frame 1221. The longitudinal support beam extends in a second direction of the lower box body 12, and is fixedly connected to the transverse support beam and the side frame 1221. The first direction intersects with the second direction. Gas can flow between the at least two accommodating spaces, so that each accommodating space can complete pressure relief protection through the pressure relief mechanism.

The at least one partition member 1222 is disposed in the side frame 1221, to partition the accommodating cavity 123 into the at least two accommodating spaces. Each accommodating space may be used for accommodating the battery cell 20, to regionally manage and control the battery cell 20, thereby further improving stability of use of the battery apparatus.

According to some embodiments of the present application, referring to FIG. 2 to FIG. 6, the present application provides a battery apparatus, including a battery box 10, a battery cell 20, and a pressure relief mechanism 124. The battery box 10 includes a bottom plate 121 and a box body frame 122 disposed surrounding a peripheral side of the bottom plate 121, and an accommodating cavity 123 is defined between the bottom plate 121 and the box body frame 122. The battery cell 20 is accommodated in the accommodating cavity 123. The box body frame 122 includes a side frame 1221 and at least one partition member 1222 disposed in the side frame 1221. The at least one partition member 1222 partitions the accommodating cavity 123 into at least two accommodating spaces. Each accommodating space is used for accommodating the battery cell 20. An avoidance cavity 12213 is provided on a side of the side frame 1221 that faces away from the accommodating cavity 123. The avoidance cavity 12213 has an avoidance notch. In addition, the box body frame 122 is provided with a first hole 12215. The first hole 12215 communicates with the accommodating cavity 123 and the avoidance cavity 12213. The pressure relief mechanism 124 is disposed in the avoidance cavity 12213 and blocks the first hole 12215. Through the technical solutions of the present application, a space occupied by the pressure relief mechanism 124 outside the battery box 10 can be reduced, so that impact on a user interface can be reduced.

The foregoing descriptions are merely preferred specific implementations of the present application, but are not intended to limit the protection scope of this application. Any variation or replacement readily figured out by a person skilled in the art within the technical scope disclosed in the present application shall fall within the protection scope of the present application. Therefore, the protection scope of the present application is subject to the protection scope of the claims.

Finally, it should be noted that, the above embodiments are merely used for illustrating rather than limiting the technical solutions of the present application. Although the present application is described in detail with reference to the foregoing embodiments, it should be appreciated by a person of ordinary skill in the art that, modifications may still be made to the technical solutions described in the various foregoing embodiments, or equivalent replacements may be made to a part or all of the technical features; and these modifications or replacements will not cause the essence of corresponding technical solutions to depart from the scope of the technical solutions in the embodiments of the present application, and should be all included in the scope of the claims and the specification of the present application. In particular, as long as there is no structural conflict, the various technical features mentioned in the embodiments can be combined in any way. The present application is not limited to the specific embodiments disclosed herein, but includes all technical solutions that fall within the scope of the claims.

## Claims

1. A battery apparatus, comprising:
a battery box, comprising a lower box body, wherein the lower box body comprises a bottom plate and a box body frame connected to the bottom plate, and an accommodating cavity is defined between the bottom plate and the box body frame;
a battery cell, accommodated in the accommodating cavity; and
a pressure relief mechanism, wherein an avoidance cavity is provided on a side of the box body frame that faces away from the accommodating cavity, the avoidance cavity has an avoidance notch, the box body frame is provided with a first hole, the first hole communicates with the accommodating cavity and the avoidance cavity, and the pressure relief mechanism is disposed in the avoidance cavity and mounted in the first hole.

2. The battery apparatus according to claim 1, wherein the box body frame comprises a side frame, and the side frame is disposed surrounding a peripheral side of the bottom plate and defines the accommodating cavity between the side frame and the bottom plate; and the side frame is provided with the first hole, and the avoidance cavity is provided on a side of the side frame that faces away from the accommodating cavity.

3. The battery apparatus according to claim 2, wherein the side frame comprises a first side beam, the first side beam comprises a first plate body, a second plate body, and a blocking member, the first plate body and the second plate body are disposed spaced away in parallel, and the first plate body is located on a side of the second plate body that is close to the battery cell; and
the first hole is provided on the first plate body, the avoidance notch is provided on the second plate body, the blocking member is disposed surrounding an inner peripheral side of the avoidance notch, and defines the avoidance cavity between the blocking member and a side of the first plate body that faces away from the battery cell, and the pressure relief mechanism is mounted on the first plate body.

4. The battery apparatus according to claim 3, wherein the blocking member comprises an enclosure plate, and the enclosure plate is fixedly connected to an inner wall surface of the avoidance notch and the side of the first plate body that faces away from the battery cell.

5. The battery apparatus according to any one of claims 2 to 4, wherein the side frame comprises a second side beam, a side surface of the second side beam that faces away from the accommodating cavity is partially recessed to form the avoidance cavity, a blocking surface is formed at one end of the avoidance cavity that faces away from the avoidance notch, the blocking surface is provided with the first hole, and the pressure relief mechanism is mounted on the blocking surface.

6. The battery apparatus according to any one of claims 2 to 5, wherein the side frame comprises a side frame main body and an adapter beam, the side frame main body is disposed surrounding the peripheral side of the bottom plate and defines the accommodating cavity between the side frame main body and the bottom plate, the adapter beam is disposed on a side of the side frame main body that faces away from the accommodating cavity, and defines a mounting cavity between the adapter beam and the side frame main body, and the mounting cavity is configured to mount a high-voltage box, and allow gas to flow between the mounting cavity and the accommodating cavity; and
the avoidance cavity and the first hole are provided on the adapter beam.

7. The battery apparatus according to claim 6, wherein the adapter beam comprises an adapter beam main body and two end connection beams connected to two ends of the adapter beam main body, and the adapter beam main body is connected to the side frame main body through the two end connection beams; and
a side of the end connection beam that faces away from the mounting cavity is partially recessed to form the avoidance cavity, and a bottom wall surface of the avoidance cavity is provided with the first hole.

8. The battery apparatus according to claim 7, wherein the end connection beam comprises a sheet metal part or a die-casting part; and/or
the end connection beam is separately welded to the adapter beam main body and the side frame main body.

9. The battery apparatus according to any one of claims 2 to 8, wherein the box body frame further comprises at least one partition member, and the at least one partition member is disposed in the accommodating cavity and partitions the accommodating cavity into at least two accommodating spaces.

10. A power consuming apparatus, comprising the battery apparatus according to any one of claims 1 to 9, wherein the battery apparatus is configured to supply power to the power consuming apparatus.
